# EUROPÄISCHE PATENTSCHRIFT

(11) **EP 3 641 559 B1**
(45) Veröffentlichungstag und Bekanntmachung des Hinweises auf die Patenterteilung: **13.05.2026**
(21) Anmeldenummer: 18730771.5
(22) Anmeldetag: 12.06.2018
(51) Int. Cl.: A23L 7/17, A23B 2/50, A23B 2/60, A23B 11/60, A23L 5/30, A23L 19/00, A23L 7/117, A23B 11/16, A23L 19/18

(54) **VERFAHREN ZUR HERSTELLUNG VON EINEM NAHRUNGSMITTEL, INSBESONDERE EINEM SNACK-PRODUKT, MIT VERBESSERTEM EINBRINGEN EINES ZUSATZSTOFFES DURCH ANLEGEN EINES ELEKTRISCHEN FELDES**
METHOD FOR PRODUCING A FOOD, IN PARTICULAR A SNACK PRODUCT, WITH IMPROVED INTRODUCTION OF AN ADDITIVE BY APPLICATION OF AN ELECTRIC FIELD
PROCÉDÉ DE FABRICATION D'UN PRODUIT ALIMENTAIRE, NOTAMMENT UN PRODUIT DE GRIGNOTAGE, AVEC INTRODUCTION AMÉLIORÉE D'UN ADDITIF PAR APPLICATION D'UN CHAMP ÉLECTRIQUE

(30) Priorität: 20.06.2017 DE 102017210328
(43) Veröffentlichungstag der Anmeldung: 29.04.2020
(73) Patentinhaber: Elea Service GmbH, 49610 Quakenbrück (DE)
(72) Erfinder: OSTERMEIER, Robin, 49090 Osnabrück (DE); BEYER, Isabell, 30173 Hannover (DE); TOEPFL, Stefan, 49076 Osnabrück (DE)
(74) Vertreter: Grünecker Patent- und Rechtsanwälte PartG mbB
(86) Internationale Anmeldenummer: PCT/EP2018/065442
(87) Internationale Veröffentlichungsnummer: WO 2018/234089

(56) Entgegenhaltungen:
- EP-A1- 1 980 158
- EP-A1- 1 994 836
- EP-A1- 2 142 005
- EP-A1- 2 201 084
- EP-A1- 2 298 088
- EP-A1- 2 941 968
- WO-A1-03/070026
- US-A- 4 695 472
- US-A1- 2006 110 504
- US-A1- 2017 035 078
- JIHÈNE BEN AMMAR ET AL: "Effect of a Pulsed Electric Field and Osmotic Treatment on Freezing of Potato Tissue", FOOD BIOPHYSICS, vol. 5, no. 3, 25 June 2010 (2010-06-25), Boston, pages 247 - 254, XP055492661, ISSN: 1557-1858, DOI: 10.1007/s11483-010-9167-y
- LIU TINGTING ET AL: "Effect of pulsed electric fields on the structure and frying quality of "kumara" sweet potato tubers", INNOVATIVE FOOD SCIENCE AND EMERGING TECHNOLOGIES, ELSEVIER, AMSTERDAM, NL, vol. 39, 20 December 2016 (2016-12-20), pages 197 - 208, XP029896827, ISSN: 1466-8564, DOI: 10.1016/J.IFSET.2016.12.010
- BLAHOVEC JIRÍ ET AL: "Pulsed Electric Fields Pretreatments for the Cooking of Foods", FOOD ENGINEERING REVIEWS, SPRINGER, US, vol. 9, no. 3, 18 September 2017 (2017-09-18), pages 226 - 236, XP036328758, ISSN: 1866-7910, [retrieved on 20170918], DOI: 10.1007/S12393-017-9170-X

## Beschreibung

Die vorliegende Erfindung betrifft die Herstellung von einem Nahrungsmittel, insbesondere von einem Snack-Produkt.

Snack-Produkte sind konservierte Nahrungsmittel, die einen Imbiss, also eine Zwischenmahlzeit darstellen und oft als Fingerfood verbrauchsfertig verpackt angeboten werden. Beispiele für Snack-Produkte sind Knabberprodukte wie getrocknete Früchte, Nussmischungen oder Salzgebäck wie Kartoffelchips, Erdnussflips oder Cracker.

Bei der Herstellung solcher Snack-Produkte ist es üblich, dass Zusatzstoffe wie Aromen, Salze, Gewürze am Ende des Herstellungsverfahrens, nach der Konservierung, oberflächlich aufgetragen werden.

Allerdings führt die oberflächliche Auftragung zu einer ungleichmäßigen Verteilung, da die Zusatzstoffe nicht in den Kern des Nahrungsmittels gelangen. Dies ist nicht nur nachteilig für die Produktqualität, wie den Geschmackseindruck, sondern erfordert eine erhöhte oberflächliche Dosierung des Zusatzstoffes, um das Fehlen des Zusatzstoffes im Inneren des hergestellten Nahrungsmittels auszugleichen.

In der EP 1 994 836 A1 ist ein Verfahren zum Herstellen von Kartoffeln mit einem verringerten Gehalt an reduzierenden Zuckern beschrieben. Dabei werden die Kartoffeln in einem wässrigen Trägermaterial suspendiert und anschließend einer PEF("pulsed electric fields")-Behandlung ausgesetzt, wobei die reduzierenden Zucker aus den Kartoffeln in den Flüssigkeitsträger austreten, bevor die Kartoffeln geschnitten und abschließend frittiert werden.

Die US 2017/035078 A1 betrifft ein Verfahren zur Herstellung von Kartoffelchips. Dabei werden ganze Kartoffeln oder Kartoffelscheiben mit PEF behandelt und anschließend in einem zwei-stufigen Verfahren frittiert.

In der EP 1 980 158 A1 ist beschrieben, dass Kartoffeln mittels PEF behandelt werden, anschließend zerkleinert, in einem oder mehreren Tauchbädern gewaschen und abschließend zu einem Knabberprodukt verarbeitet werden.

In der EP 2 941 968 A1 ist beschrieben, Kartoffeln mittels PEF zu behandeln, um reduzierende Zucker vor dem Frittieren der Kartoffelzelle heraus zu waschen.

In der EP 2 142 005 A1 ist ein Verfahren zur Behandlung eines Pflanzenmaterials beschrieben, in welchem das Material mittels PEF behandelt und anschließend eine Enzymbehandlung ausgesetzt wird. Dieses Verfahren kann beispielsweise im Rahmen der Herstellung von Chips oder Pommes eingesetzt werden.

In der EP 2 201 084 A1 ist ein Verfahren zum Einfrieren von Pflanzenprodukten beschrieben. Das Verfahren umfasst die Schritte des Anlegens eines gepulsten elektrischen Feldes, Zugeben eines Gefrierschutzmittels, Ausüben eines Drucks auf das Pflanzenmaterial gefolgt von einer Ruhephase und einem abschließenden Einfrieren.

Die WO 03/070026 A1 offenbart die Behandlung von Flüssigkeiten, beispielsweise Fruchtsäften, mittels gepulster elektrischer Felder sowie eine Zugabe von Anti-Fungiziden, vor oder nach der PEF-Behandlung, zu den flüssigen Lebensmitteln.

In der EP 2 298 088 A1 ist ein Verfahren zur Konservierung von Lebensmitteln, insbesondere Getränke, beschrieben, wobei dem zu behandelnden Lebensmittel Dialkyldicarbonate und weitere antimikrobiell wirkenden Konservierungsmittel zugegeben werden und die Lebensmittel anschließend mittels PEF behandelt werden.

In der US 4 695 472 A ist ein Verfahren zum Konservieren eines Lebensmittels, beispielweise eines Fruchtsaftes oder flüssigen Eiproduktes, beschrieben, bei dem eine PEF-Behandlung durchgeführt wird.

In der wissenschaftlichen Veröffentlichung Jihene Ben Ammar et al., "Effect of a Pulsed Electric Field and Osmotic Treatment on Freezing of Potato Tissue", FOOD BIOPHYSICES, vol. 5, no. 3, pages 247 - 254, ist ein Verfahren zum Gefriertrocknen von Kartoffelstückchen beschrieben, bei welchem die Kartoffelstückchen einer PEF-Behandlung und anschließenden osmotischen Behandlung unterzogen werden.

In der US 2006/0110504 A1 ist ein Verfahren zur Verbesserung der Eigenschaften von Lebensmitteln durch Elektroporation mittels elektrischer Pulse beschrieben. Nach der Elektroporation des Lebensmittels umfasst das Verfahren den Schritt des Aussetzens des Lebensmittels mit einem Lebensmittelagens, so dass dieses in das Lebensmittel eindringt.

Die Aufgabe der vorliegenden Erfindung ist somit die Herstellung von einem Nahrungsmittel, insbesondere einem Snack-Produkt, in dem die Zusatzstoffe gleichmäßig verteilt sind und das somit eine homogenere Produktqualität aufweist.

Die vorliegende Erfindung löst diese Aufgabe durch ein Verfahren zur Herstellung von einem Nahrungsmittel umfassend die folgenden Schritte:
- Konditionieren des Nahrungsmittels durch Anlegen eines elektrischen Feldes;
- Einbringen eines Zusatzstoffes in das Nahrungsmittel;
- Konservieren des Nahrungsmittels, nachdem der Zusatzstoff eingebracht wurde; und
- Einstellen eines gewünschten Ölgehaltes des Nahrungsmittels vor dem Schritt des Konservierens, wobei der Ölgehalt während des Einbringens des Zusatzstoffes in das Nahrungsmittel eingestellt wird, und wobei ein in Öl gelöster, geschmacksgebender Zusatzstoff eingebracht wird, der als Öllösung oder emulgiert vorliegt und mit dem Nahrungsmittel in Kontakt gebracht wird.

Die vorliegende Erfindung hat überraschenderweise aufgezeigt, dass ein Konditionieren des Nahrungsmittels durch Anlegen eines elektrischen Feldes einen Zusatzstoff gleichmäßig in das Nahrungsmittel einbringt, wobei der Zusatzstoff nach dem Konservieren des Nahrungsmittels homogen verteilt im Nahrungsmittel erhalten bleibt. Im Vergleich zu einer rein oberflächlichen Applikation beispielsweise eines Gewürzes oder eines Aromastoffes, erreicht man mit dem erfindungsgemäßen Verfahren somit eine gleichmäßigere Verteilung des Zusatzstoffes und erzielt ein Nahrungsmittel mit einem gleichwertigeren Geschmackseindruck. Zudem wurde überraschenderweise festgestellt, dass eine homogenere Produktqualität selbst bei einer geringeren Dosage des Zusatzstoffes, als beim oberflächlichen Aufbringen nach dem Konservieren erreicht werden kann. Wenn man einen gewünschten Ölgehalt von beispielsweise 10 % einstellt, kann mitunter auf ein energie- und kostenintensives Konservieren mittels beispielsweise Frittieren verzichten und stattdessen eine andere, schonendere bzw. resourcen- und ökonomisch sinnvollere Konservierungsmethode angewendet werden. Da viele Aromen bzw. Gewürzen eher öl- als wasserlöslich sind, kann auf einfache und vorteilhafte Weise der zusätzliche vorteilhafte Nebeneffekt eines Einstellens eines gewünschten Ölgehaltes mit dem erfindungsgemäßen Verfahren realisiert werden.

Unter Nahrungsmittel sind im Wesentlichen aus Makronährstoffen bestehende Substanzen zu verstehen, die konsumiert werden, um den menschlichen Körper zu ernähren. Makronährstoffe, also Kohlenhydrate, Lipide/Fette und Proteine führen den Menschen chemisch gebundene Energie zu.

Ein Zusatzstoff ist eine Verbindung, die Lebensmitteln zur Erzielung chemischer, physikalischer oder auch physiologischer Effekte zugegeben wird. Zusatzstoffe alleine werden nicht als Lebensmittel verzehrt.

Unter dem Konservieren ist ein Prozess bei der Behandlung von Lebensmitteln zu verstehen, der diese länger haltbar macht, indem Verderben gestoppt oder stark verlangsamt wird, wobei zugleich Nährwert, Geschmack, Farbe und Beschaffenheit der Nahrungsmittel möglichst erhalten bleibt.

Die Erfindung kann mit den folgenden, jeweils für sich vorteilhaften und beliebig miteinander kombinierbaren Weiterentwicklungen und vorteilhaften Ausgestaltungen weiter verbessert werden.

Gemäß einer Ausführungsform wird beim Konditionieren ein gepulstes elektrisches Feld angelegt, was einen Zellaufschluss bewirkt. Es findet also eine Elektroporation statt, bei welcher durch Anlegen eines elektrischen Feldes, insbesondere eines gepulsten elektrischen Feldes, die Semipermeabilität der Zellmembran aufgehoben wird. Die Aufhebung der Semipermeabilität erleichtert das Einbringen von Zusatzstoffen in die Zellen des Nahrungsmittels und verbessert den Massentransport innerhalb der Zellstrukturen. Die Semipermeabilität der Zellmembran kann reversibel oder irreversibel aufgehoben werden, wobei eine irreversible Elektroporation bevorzugt wird, weil die dauerhafte Aufhebung der Semipermeabilität mehr Flexibilität bei der Abfolge der einzelnen Verfahrensschritte lässt. Aber auch eine irreversible Elektroporation, welche einen geringeren Energiebedarf benötigt als eine irreversible Elektroporation kann praktikabel sein.

Beim Konditionieren kann ein Energieeintrag von wenigstens 0,5 kJ/kg, vorzugsweise von wenigstens einem kJ/kg erfolgen. Ein Energieeintrag in dieser Größenordnung ist gut geeignet, um eine irreversible Elektroporation durchzuführen und Zusatzstoffe effektiv in das Nahrungsmittel einzubringen.

Es hat sich gezeigt, dass es vorteilhaft ist, wenn ein elektrisches Feld von 0,5 kV/cm bis 2 kV/cm angelegt wird. Derartige Feldstärken lassen sich mit handelsüblichen industriellen Kondensatoren erzielen, und vermeiden, dass unerwünschte thermische Effekte beim Konditionieren des Nahrungsmittels auftreten, die zu nicht erwünschten Änderungen des Nahrungsmittels führen.

Das elektrische Feld, insbesondere die elektrischen Pulse, können sowohl durch Direktkontakt des Kondensators bzw. dessen Elektroden mit dem Nahrungsmittel, als auch über leitende Fluide erzeugt werden, wobei das Nahrungsmittel ganz oder teilweise in die leitenden Fluide eingelegt wird. Dabei können verschiedene Elektrodenformen zur Anwendung kommen, beispielsweise Platten-, Ring-, Gitter-, Hohl- oder Durchflusselektroden.

Als Impulsgenerator kann vorzugsweise ein Hochspannungsimpulsgenerator eingesetzt werden, der elektrische Felder in Form von kurzen Pulsen im Mikro- bis Millisekundenbereich einer hohen Spannung im Kilovoltbereich erzeugt. Marx-Generatoren können als Hochspannungsimpulsgeneratoren eingesetzt werden.

Im Sinne einer Zeit- und Energieoptimierung kann das Nahrungsmittel mit wenigstens 10 elektrischen Pulsen, vorzugsweise 10 bis 200 elektrischen Pulsen, und besonders bevorzugt 30 bis 50 elektrischen Pulsen konditioniert werden.

Das angelegte elektrische Feld kann insbesondere ein nicht-thermische wirkendes elektrisches Feld sein, bei dem die Energieobergrenze so bemessen ist, dass im Wesentlichen keine Erwärmung des Nahrungsmittels im Sinne einer Ohmschen Erhitzung stattfindet.

Gemäß einer weiteren Ausführungsform kann der Schritt des Konditionierens vor oder während des Schrittes des Einbringens des Zusatzstoffes erfolgen. Das gleichzeitige Konditionieren und Einbringen des Zusatzstoffes reduziert die Anzahl der Bearbeitungsschritte des Nahrungsmittels und beschleunigt das Herstellungsverfahren. Eine sukzessive Abfolge der Schritte des Konditionierens und anschließenden Einbringens des Zusatzstoffes bietet eine größere Variabilität hinsichtlich der einzubringenden Zusatzstoffe, die beispielsweise nicht kompatibel mit einem Fluid sind, in welchem die Elektroporation durchgeführt wird bzw. die beim Anlegen eines elektrischen Feldes geschädigt werden könnten.

Gemäß einer weiteren Ausführungsform kann das erfindungsgemäße Verfahren den weiteren Schritt umfassen, dass mechanische Energie auf das Nahrungsmittel, vorzugsweise während oder nach dem Schritt des Einbringens des Zusatzstoffes einwirkt. Mechanische Energie kann beispielsweise auf das Nahrungsmittel einwirken, indem es zerkleinert, gerührt, geknetet, geschlagen und/oder getumbelt wird. Das Einwirken mechanischer Energie auf das Nahrungsmittel verbessert die Diffusion und somit die Verteilung des Zusatzstoffes in der Struktur des Nahrungsmittels. Mittels mechanischer Energie kann auch die Oberfläche vergrößert und der Stofftransport verbessert werden. In einer Ausführungsform findet der Schritt des Einwirkens mechanischer Energie auf das Nahrungsmittel vor dem Schritt des Konservierens statt, um sicherzustellen, dass vor dem in der Regel abschließenden Konservierungsschritt eine homogene Verteilung des Zusatzstoffes im Nahrungsmittel erreicht ist.

Wie eingangs bereits erwähnt, handelt es sich bei einem Zusatzstoff nicht um ein Lebensmittel, das verzehrt wird, sondern um Verbindungen, die dem Lebensmittel zur Erzielung chemischer, physikalischer oder auch physiologischer Effekte zugemischt werden. Erfindungsgemäß ist der Zusatzstoff ein in Öl gelöster, geschmacksgebender Zusatzstoff. Hier beschrieben (nicht in den Ansprüchen enthalten) sind ein strukturgebender bzw. strukturerhaltender, ein farbgebender, ein geruchsgebender, ein den Gebrauchswert regulierender, ein den Nährwert regulierender, ein den Gebrauchswert stabilisierender, ein den Nährwert stabilisierender Zusatzstoff und/oder ein die störungsfreie Weiterverarbeitung des Nahrungsmittels sicherstellender Zusatzstoff. Zu Zusatzstoffen, welche den Gebrauchs- bzw. Nährwert regulieren bzw. stabilisieren, zählen insbesondere Zusatzstoffe, welche die chemische und mikrobielle Haltbarkeit verarbeitender Lebensmittel fördern. Zusatzstoffe, welche die störungsfreie Weiterverarbeitung des Nahrungsmittels sicherstellen, sind insbesondere Zusatzstoffe, die technologische Eigenschaften des Nahrungsmittels erhalten bzw. verbessern, beispielsweise die Verbesserung der Backfähigkeit, der Streichfähigkeit, der Rieselfähigkeit oder die Maschinentauglichkeit. Beispielhafte Zusatzstoffe, insbesondere bei der Herstellung von Snackprodukten sind Salze, Aromen, Extrakte oder Gewürze.

Gemäß einer weiteren Ausführungsform kann ein Präkursor des Zusatzstoffes in das Nahrungsmittel eingebracht werden, welcher in den Zusatzstoff umwandelbar ist. Der Präkursor, also eine Vorstufe des Zusatzstoffes kann beispielsweise während des Konservierens in den Zusatzstoff umgewandelt werden.

Erfindungsgemäß wird ein in Öl gelöster, geschmacksgebender Zusatzstoff eingebracht, der als Öllösung oder emulgiert vorliegt und mit dem Nahrungsmittel in Kontakt gebracht wird. Dazu kann der Zusatzstoff beispielsweise in das Nahrungsmittel injiziert werden. Es ist auch möglich, das Nahrungsmittel in den Zusatzstoff einzulegen, das Nahrungsmittel mit dem Zusatzstoff zu bestreichen, zu besprühen bzw. das Nahrungsmittel mit dem Zusatzstoff zu bestäuben, je nach Art des Zusatzstoffes und der Applikationsform, in der es vorliegt.

Wird das Nahrungsmittel in den Zusatzstoff eingelegt und beispielsweise ein in Wasser gelöster Zusatzstoff verwendet, könnte diese Lösung mit eingelegtem Nahrungsmittel dem elektrischen Feld ausgesetzt und auf diese Weise die Schritte des Konditionierens und des Einbringens des Zusatzstoffes simultan durchgeführt werden.

Gemäß einer weiteren Ausführungsform wird das Nahrungsmittel beim Schritt des Konservierens erwärmt, gewaschen, abgekühlt, gefroren, bestrahlt, getrocknet, vakuumiert oder begast. Beispielsweise kann das Nahrungsmittel konserviert werden, indem es gegart wird, also durch Zufuhr von Energie in einen genussfähigen Zustand überführt wird. Das Lebensmittel kann beispielsweise frittiert, gebacken oder heißluftgetrocknet werden. Allerdings sind auch andere Gartechniken wie Braten oder feuchte Gartechniken wie Kochen, Dünsten möglich. Auch ein Gefriertrocknen als Konservierungsform ist möglich.

Gemäß einer Ausführungsform, bei welcher ein Präkursor des Zusatzstoffes in das Nahrungsmittel eingebracht wird, wandelt das ausgewählte Konservierungsmittel, beispielsweise eine Temperaturänderung, Bestrahlung mit Teilchen- oder elektromagnetischer Strahlung, Druckänderung, aber auch eine pH-Wert-Änderung oder Gaseinwirkung den Präkursor in den Zusatzstoff um.

Gemäß einer Ausführungsform wird das Nahrungsmittel aus einer Rohware, vorzugsweise einer pflanzlichen Rohware, wie beispielsweise Kartoffeln, Knollen, Wurzeln, Gemüse oder Früchten hergestellt. Dabei kann insbesondere die Rohware konditioniert und der Zusatzstoff in die Rohware eingebracht werden.

Gemäß einer weiteren Ausführungsform kann mit dem erfindungsgemäßen Verfahren ein Snack-Produkt hergestellt werden, es kann beispielsweise ein Knabber-Produkt wie ein Salzgebäck oder auch konservierte, beispielsweise getrocknete Früchte oder ein Salzgebäck wie Chips oder Flips hergestellt werden.

Im Folgenden werden Versuchsbeispielen mit Bezug auf die Zeichnungen näher erläutert.

Es zeigen:
- Fig. 1: ein Fließschema eines Versuchsaufbaus für ein beispielhaftes Verfahren;
- Fig. 2: ein Balkendiagramm zum Anstieg der Salzkonzentration konditionierter und unkonditionierter Kartoffelscheiben im Vergleich zu einer Kontrollprobe;
- Fig. 3: ein Balkendiagramm zum Anstieg der Salzkonzentration frittierter konditionierter und unkonditionierter Kartoffelscheiben im Vergleich zu einer Kontrollprobe; und
- Fig. 4: ein Balkendiagramm mit einer Übersicht der Salzgehalte der Kontrollproben, der unkonditionierten sowie der konditionierten Proben.

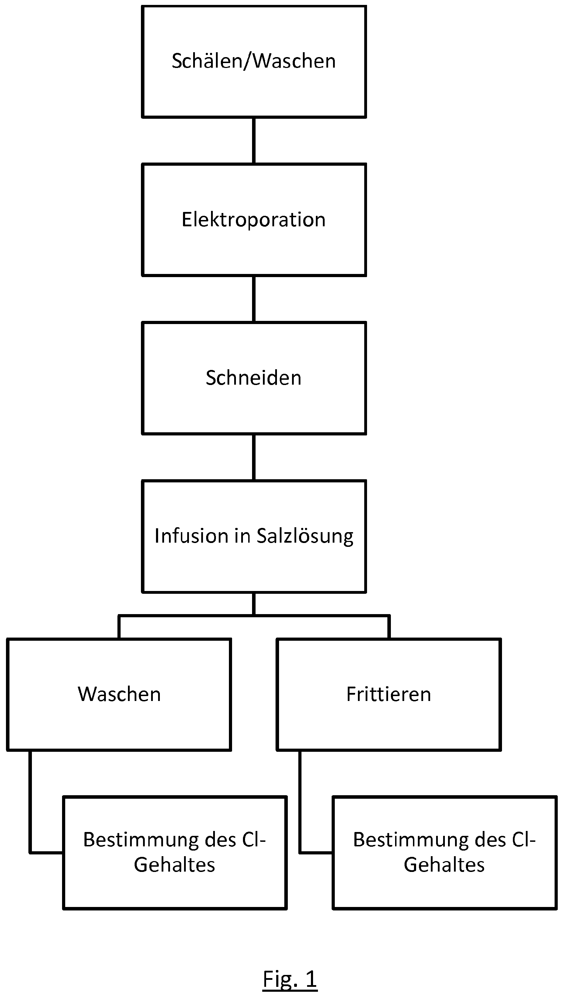

Nachfolgend wird ein beispielhaftes Verfahren zum Herstellen von Lebensmitteln unter Bezugnahme auf das Fließdiagramm der Fig. 1 vorgestellt. Das Fließdiagramm der Fig. 1 skizziert die Abfolge des Versuches, der anschließend näher erläutert wird.

Das Verfahren zum Herstellen von Lebensmitteln, insbesondere von Snack-Produkten, umfasst die Schritte des Konditionierens von Nahrungsmitteln; des Einbringens eines Zusatzstoffes in das Nahrungsmittel; und Konservieren des Nahrungsmittels, nachdem der Zusatzstoff eingebracht wurde.

Im vorliegenden Fließschema findet der Schritt des Konditionierens mittels Elektroporation statt. Dabei wird das Nahrungsmittel gepulsten elektrischen Feldern ausgesetzt, welche einen Zellaufschluss bewirken, bei dem die Semipermeabilität der Zellmembran aufgehoben wird. Beim Fließschema der Fig. 1 ist dem Schritt des Konditionierens ein Schritt des Schälens und Wachens des Nahrungsmittels vorgeschaltet.

Im Anschluss an die Elektroporation wird das Lebensmittel beim beispielhaften Verfahren gemäß Fließschema der Fig. 1 zerkleinert, nämlich geschnitten. Durch Einwirken mechanischer Energie auf das Nahrungsmittel wird in dem beispielhaften Verfahren die effektiv für einen Massentransport zur Verfügung stehende Oberfläche vergrößert, was die Diffusion von Zusatzstoffen in das Nahrungsmittel im anschließenden Schritt des Einbringens des Zusatzstoffes in das Nahrungsmittel verbessert. In dem beispielhaften Verfahren wird der Zusatzstoff dadurch in das Nahrungsmittel eingebracht, dass das Nahrungsmittel in eine Salzlösung eingelegt wird. Es findet also eine Infusion mit Salz statt.

Nach dem Schritt des Einbringens des Zusatzstoffes, im vorliegenden Beispiel Salz, in das Nahrungsmittel findet abschließend ein Schritt des Konservierens des Nahrungsmittels statt. Im beispielhaften Fließschema werden zwei Konservierungsmethoden untersucht. Einmal wird das Nahrungsmittel gegart, nämlich frittiert. Als alternatives Konservierungsverfahren wird das Lebensmittel gewaschen, bevor abschließend der Salzgehalt in dem hergestellten Lebensmittel bestimmt wird, indem die Konzentration an Chloridionen ermittelt wird.

Nachfolgend wird anhand konkreter Versuchsergebnisse das Verfahren, das im Fließschema der Fig. 1 dargestellt ist, näher erläutert.

Versuch: Einfluss einer Konditionierung durch Anwenden eines elektrischen Feldes auf das Einbringen eines Zusatzstoffes in ein Nahrungsmittel.

Der Versuchsablauf erfolgte wie in dem Fließdiagramm der Fig. 1 dargestellt.

Untersucht wurden Kartoffeln der Sorte Lady Claire, die in einem ersten Schritt geschält und gewaschen wurden.

Die Proben wurden anschließend gepulsten elektrischen Feldern ausgesetzt. Es fand eine Elektroporation unter folgenden Bedingungen statt:
W = 0,63 kJ/kg
E = 1,07 kV/cm
Anzahl der Pulse (n) = 7
Pulsdauer = 7 - 50 µsek

Anschließend wurden die Proben in etwa 1,4 mm Breite Kartoffelscheiben geschnitten, bevor sie für ein bzw. drei Minuten unter leichtem Rühren in ein Salzbad eingelegt wurden. Die Salz(Natriumchlorid)-Konzentration in dem Salzbad betrug
- 0 % bei den Kontrollproben;
- 0,5 %, 2 % bzw. 4 % bei den unkonditionierten (ohne Elektroporation) bzw. konditionierten (mit Elektroporation) Proben.

Die Verweildauer im Salzbad betrug 0 Minuten bei den Kontrollproben und eine bzw. drei Minuten bei den unkonditionierten und konditionierten Proben.

Nach Einbringen des Zusatzstoffes durch Einlegen in die Salzlösung wurde eine Probengruppe konserviert, indem sie für 10 Sekunden in Leitungswasser gewaschen wurde ("*raw*")*.* Die andere Probe wurde für drei Minuten bei 170° C frittiert ("*chip*")*.*

Abschließend wurde der Salzgehalt der Nahrungsmittel bestimmt, indem der Natriumgehalt in den einzelnen Proben mittels ICP (induced coupled plasma) massenspektometrisch ermittelt wurde.

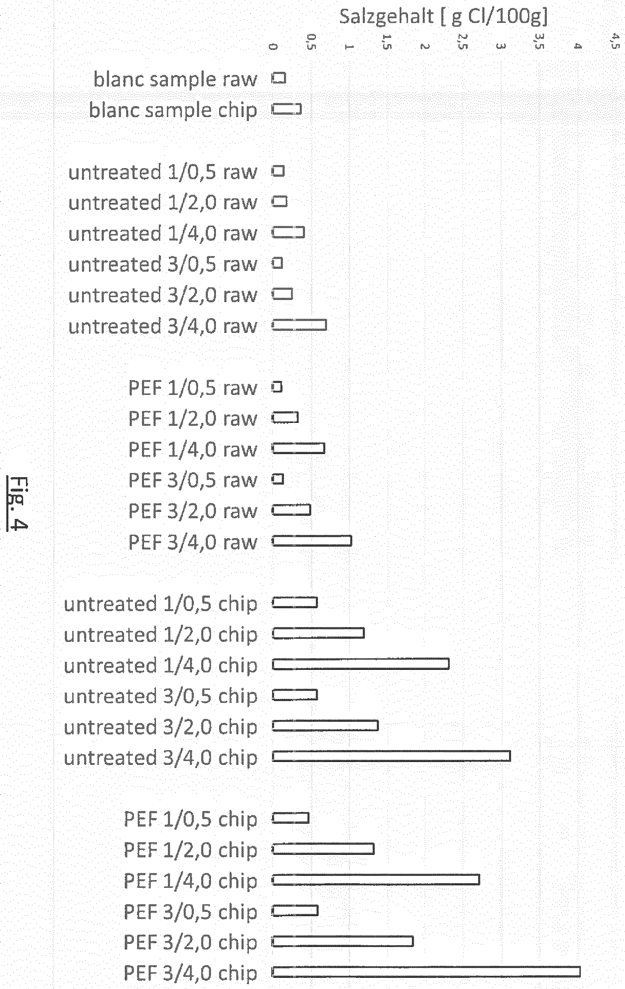

Die ermittelten Salzkonzentrationen der Proben sind im Beispieldiagramm der Fig. 4 zusammengefasst. In Fig. 4 bedeutet:
- *"blank sample":* Kontrollprobe einer Kartoffel, die lediglich geschält, gewaschen und in Scheiben geschnitten wurde, also keiner Elektroporation ausgesetzt und auch nicht in ein Salzbad eingelegt wurde;
- *"untreated 1":* eine unkonditionierte Probe, die keiner Elektroporation unterzogen wurde, welche für eine Minute im Salzbad eingelegt wurde;
- *"untreated 3":* eine unkonditionierte Probe, die keiner Elektroporation unterzogen wurde, welche für drei Minuten im Salzbad eingelegt wurde;
- *"PEF 1":* eine konditionierte Probe, die einer Elektroporation unterzogen wurde, und für eine Minute in dem Salzbad behandelt wurde;
- *"PEF 3":* eine konditionierte Probe, die einer Elektroporation unterzogen wurde, und für drei Minuten in dem Salzbad behandelt wurde;
- *"raw":* eine Probe, die vor Bestimmung des Salzgehaltes gewaschen wurde;
- *"chip":* eine Probe, die vor Bestimmung des Salzgehaltes frittiert wurde;
- die Zahlen *"0,5", "2,0"* bzw. *"4,0":* vor *"chip"* oder *"raw"* geben an, welche Salzkonzentration, 0,5 %, 2 % oder 4 % die Nach-Lösung betrug, in welche das Nahrungsmittel eingelegt wurde.

Wie der Fig. 4 zu entnehmen ist, erhöhte der Schritt des Konditionierens den Salzgehalt der Proben signifikant, sowohl im Vergleich zu den Kontrollproben, als auch im Vergleich zu den unkonditionierten Proben, die mit Ausnahme der Elektroporation identisch zu den konditionierten Proben behandelt wurden.

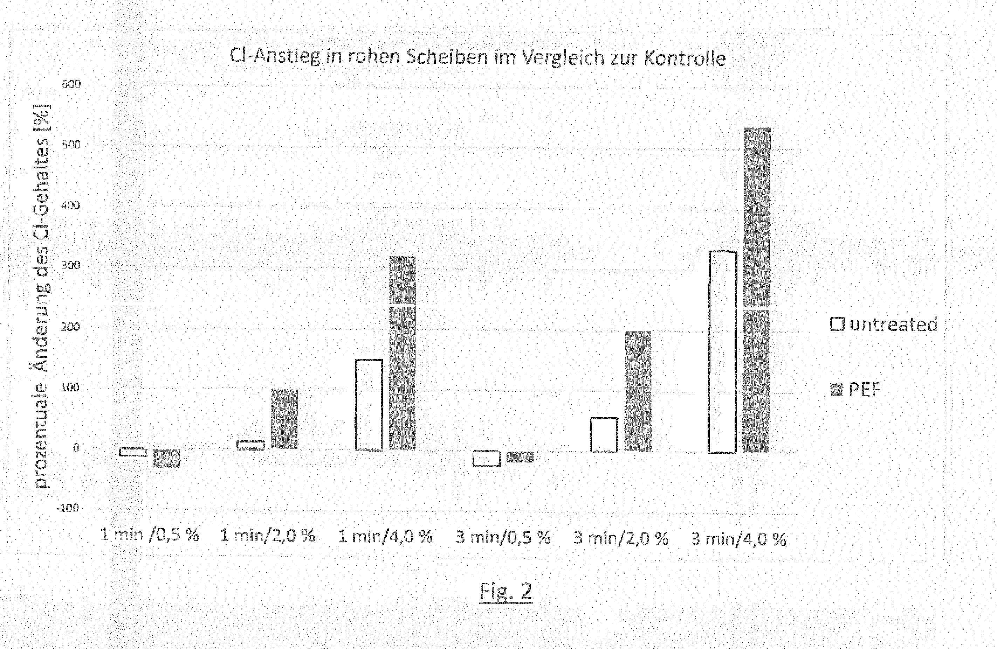

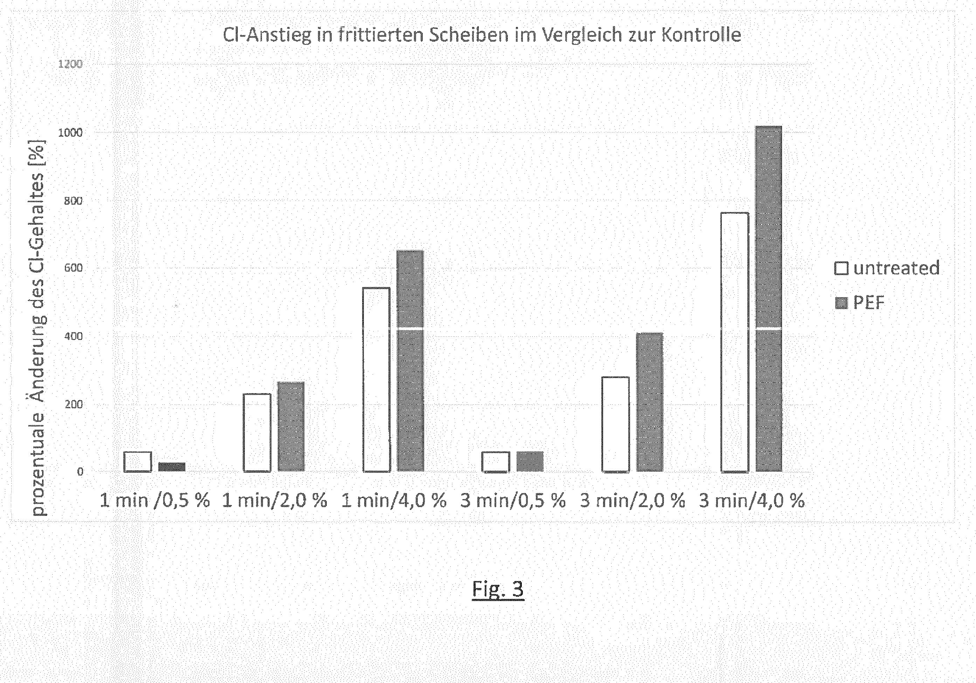

Dieses Ergebnis spiegelt sich auch in den Balkendiagrammen der Fig. 2 und 3 wider, in denen die unkonditionierten und die konditionierten Proben gegenübergestellt wurden. Es zeigt sich, dass insbesondere bei den höheren Konzentrationen von 2 bzw. 4 % Salz im Salzbad signifikant mehr Salz in die Proben mit dem hier beschriebenen Verfahren eingebracht wird.

Ähnliche Versuche wie der vorgestellte Versuch mit Kartoffelscheiben wurden auch mit rote Beete und Süßkartoffeln durchgeführt. Bei Versuchen mit roter Beete wurden die Scheibe für eine Minute in einer 2,5 %igen Salzlösung, bei Süßkartoffeln in einer 5 %igen Salzlösung eingelegt.

Auch bei rote Beete und Süßkartoffel konnte, wie auch bei Kartoffeln, eine Verbesserung der Farbe und Knusprigkeit im Endprodukt und eine erhöhte Salzaufnahme bei Durchführung des Verfahrens festgestellt werden.

## Patentansprüche

1. Verfahren zum Herstellen von einem Nahrungsmittel umfassend die folgenden Schritte:
- Konditionieren des Nahrungsmittels durch Anlegen eines elektrischen Feldes;
- Einbringen eines Zusatzstoffes in das Nahrungsmittel; und
- Konservieren des Nahrungsmittels, nachdem der Zusatzstoff eingebracht wurde,
**gekennzeichnet durch** den weiteren Schritt des Einstellens eines erwünschten Ölgehaltes des Nahrungsmittels, wobei der Ölgehalt während des Einbringens des Zusatzstoffes in das Nahrungsmittel eingestellt wird, und wobei ein in Öl gelöster, geschmacksgebender Zusatzstoff eingebracht wird, der als Öllösung oder emulgiert vorliegt und mit dem Nahrungsmittel in Kontakt gebracht wird.

2. Verfahren nach Anspruch 1, **dadurch gekennzeichnet, dass** beim Konditionieren ein gepulstes elektrisches Feld angelegt wird, was einen Zellaufschluss bewirkt.

3. Verfahren nach Anspruch 1 oder 2, **dadurch gekennzeichnet, dass** der Schritt des Konditionierens vor oder während des Schrittes des Einbringens des Zusatzstoffes erfolgt.

4. Verfahren nach einem der Ansprüche 1 bis 3, **gekennzeichnet durch** den weiteren Schritt des Einwirkens mechanischer Energie auf das Nahrungsmittel während oder nach dem Schritt des Einbringens des Zusatzstoffes.

5. Verfahren nach Anspruch 4, **dadurch gekennzeichnet, dass** mechanische Energie eingewirkt wird, indem das Nahrungsmittel zerkleinert, gerührt, geknetet, geschlagen und/oder getumbelt wird.

6. Verfahren nach einem der Ansprüche 1 bis 5, **dadurch gekennzeichnet, dass** der ölgelöste, geschmacksgebende Zusatzsoff ein Aroma, oder Gewürz ist, oder ein in einen solchen Zusatzstoff umwandelbarer Präkursor in das Nahrungsmittel eingebracht wird.

7. Verfahren nach Anspruch 6, **dadurch gekennzeichnet, dass** ein Präkursor in das Nahrungsmittel eingebracht wird, der während des Konservierens in den Zusatzstoff umgewandelt wird.

8. Verfahren nach einem der Ansprüche 1 bis 7, **dadurch gekennzeichnet, dass** der Zusatzstoff in das Nahrungsmittel injiziert wird, das Nahrungsmittel in den Zusatzstoff eingelegt, das Nahrungsmittel mit dem Zusatzstoff bestrichen, das Nahrungsmittel mit dem Zusatzstoff bestäubt und/oder das Nahrungsmittel mit dem Zusatzstoff besprüht wird.

9. Verfahren nach einem der Ansprüche 1 bis 8, **dadurch gekennzeichnet, dass** das Nahrungsmittel beim Schritt des Konservierens erwärmt, abgekühlt, gefroren, bestrahlt, getrocknet, vakuumiert und/oder begast wird.

10. Verfahren nach Anspruch 9, **dadurch gekennzeichnet, dass** das Nahrungsmittel gegart wird.

11. Verfahren nach einem der Ansprüche 1 bis 10, **dadurch gekennzeichnet, dass** das Nahrungsmittel aus einer pflanzlichen Rohware hergestellt wird.

12. Verfahren nach einem der Ansprüche 1 bis 11, **dadurch gekennzeichnet, dass** das hergestellte Nahrungsmittel ein Snack-Produkt, vorzugsweise ein Knabber-Produkt und besonders bevorzugt ein Salzgebäck ist.

## Claims

1. A method for producing a food product comprising the following steps:
- conditioning the food product by applying an electric field;
- incorporating an additive into the food product; and
- preserving the food product after the additive has been incorporated,
**characterized by** the further step of adjusting a desired oil content of the food product, wherein the oil content is adjusted during the incorporation of the additive into the food product, and wherein an oil-soluble, flavor-imparting additive is incorporated, which is present as an oil solution or in an emulsified form and is brought into contact with the food product.

2. A method according to claim 1, **characterized in that** a pulsed electric field is applied during conditioning, thereby causing cell disruption.

3. A method according to claim 1 or 2, **characterized in that** the step of conditioning takes place before or during the step of introducing the additive.

4. A method according to any one of claims 1 to 3, **characterized by** the further step of applying mechanical energy to the food product during or after the step of introducing the additive.

5. A method according to claim 4, **characterized in that** mechanical energy is applied by grinding, stirring, kneading, beating, and/or tumbling the food product.

6. A method according to any one of claims 1 to 5, **characterized in that** the oil-soluble, flavor-imparting additive is a flavoring or a spice, or a precursor convertible into such an additive is introduced into the food product.

7. A method according to claim 6, **characterized in that** a precursor is introduced into the food product, wherein the precursor is converted into the additive during the preserving step.

8. A method according to any one of claims 1 to 7, **characterized in that** the additive is injected into the food product, the food product is immersed in the additive, the food product is coated with the additive, the food product is dusted with the additive, and/or the food product is sprayed with the additive.

9. A method according to any one of claims 1 to 8, **characterized in that**, during the preservation step, the food product is heated, cooled, frozen, irradiated, dried, vacuum-packed, and/or fumigated.

10. A method according to claim 9, **characterized in that** the food product is cooked.

11. A method according to any one of claims 1 to 10, **characterized in that** the food product is produced from a plant-based raw material.

12. A method according to any one of claims 1 to 11, **characterized in that** the produced food product is a snack product, preferably a snack food, and most preferably a savory snack.

## Revendications

1. Procédé de production d'un aliment, comprenant les étapes ci-dessous consistant à :
- conditionner l'aliment grâce à l'application d'un champ électrique ;
- introduire un additif dans l'aliment ; et
- préserver l'aliment après que l'additif a été introduit,
**caractérisé par** l'étape supplémentaire consistant à ajuster une teneur en huile souhaitée de l'aliment, dans lequel la teneur en huile est ajustée lors de l'introduction de l'additif dans l'aliment, et dans lequel un additif aromatisant dissous dans l'huile est introduit, lequel additif est une solution d'huile ou est émulsionné et est mis en contact avec l'aliment.

2. Procédé selon la revendication 1, **caractérisé en ce qu'**un champ électrique pulsé est appliqué lors du conditionnement, ce qui provoque une désintégration cellulaire.

3. Procédé selon la revendication 1 ou 2, **caractérisé en ce que** l'étape de conditionnement intervient avant ou pendant l'étape d'introduction de l'additif.

4. Procédé selon l'une quelconque des revendications 1 à 3, **caractérisé par** l'étape supplémentaire consistant à appliquer une énergie mécanique à l'aliment pendant ou après l'étape d'introduction de l'additif.

5. Procédé selon la revendication 4, **caractérisé en ce que** l'énergie mécanique est appliquée en broyant, en remuant, en pétrissant, en battant et/ou en attendrissant l'aliment.

6. Procédé selon l'une quelconque des revendications 1 à 5, **caractérisé en ce que** l'additif aromatisant dissous dans l'huile est un arôme ou une épice, ou **en ce qu'**un précurseur transformable en un tel additif est introduit dans l'aliment.

7. Procédé selon la revendication 6, **caractérisé en ce qu'**un précurseur transformé en additif lors de la préservation est introduit dans l'aliment.

8. Procédé selon l'une quelconque des revendications 1 à 7, **caractérisé en ce que** l'additif est injecté dans l'aliment, l'aliment est incorporé dans l'additif, l'aliment est enduit avec l'additif, l'aliment est saupoudré avec l'additif et/ou l'aliment est pulvérisé avec l'additif.

9. Procédé selon l'une quelconque des revendications 1 à 8, **caractérisé en ce que** l'aliment est chauffé, refroidi, congelé, irradié, séché, mis sous vide et/ou gazéifié lors de l'étape de préservation.

10. Procédé selon la revendication 9, **caractérisé en ce que** l'aliment est cuit.

11. Procédé selon l'une quelconque des revendications 1 à 10, **caractérisé en ce que** l'aliment est produit à partir de matières premières végétales

12. Procédé selon l'une quelconque des revendications 1 à 11, **caractérisé en ce que** l'aliment produit est un produit pour collation, de manière préférée un produit pour le grignotage et de manière particulièrement préférée un biscuit salé.
